# EUROPEAN PATENT SPECIFICATION

(11) **EP 2 326 535 B1**
(45) Date of publication and mention of the grant of the patent: **01.05.2013**
(21) Application number: 08813576.9
(22) Date of filing: 26.09.2008
(51) Int. Cl.: B60R 21/233

(54) **AIRBAG AND METHOD OF FORMING AN AIRBAG**
AIRBAG UND VERFAHREN ZUR HERSTELLUNG EINES AIRBAGS
COUSSIN DE SÉCURITÉ GONFLABLE ET PROCÉDÉ DE FORMATION D'UN COUSSIN DE SÉCURITÉ GONFLABLE

(43) Date of publication of application: 01.06.2011
(73) Proprietor: Autoliv Development AB, 44783 Vårgårda (SE)
(72) Inventor: MACHNIK, Adam, F-95750 Chars (FR); BAILLIVET, Rémi, F-76220 Dampierre-en-bray (FR)
(74) Representative: Beattie, Alex Thomas Stewart
(86) International application number: PCT/SE2008/051079
(87) International publication number: WO 2010/036162

(56) References cited:
- EP-A1- 1 314 616
- WO-A1-2008/030144
- WO-A2-2009/003854
- GB-A- 2 417 929
- US-A1- 2004 174 003
- US-A1- 2004 174 003

## Description

This invention relates to an airbag intended to protect from injury an occupant in a motor vehicle in the event of a frontal collision. Whilst, in its preferred embodiments, the airbag is designed for use as a driver airbag, and thus to be mounted in a vehicle steering wheel in front of the driver of the vehicle, the invention is not limited to such use.

A typical driver airbag is made out of two fabric panels sewn together to create a structure which is substantially flat, or two-dimensional, when deflated. If it is necessary for the airbag to be particularly deep when inflated, a third panel or a special shape of the two panels is needed. Such a deep bag may be required when an early coupling of the driver, (i.e. engagement of the airbag with the driver at an early stage in a crash situation, at which stage the driver has not been thrown very far forwards from his or her normal position in the vehicle), is desired. Such early coupling prevents the driver from submarining (sliding under the hip portion of the seat belt) and also prevents the driver from striking the lower portion of the steering wheel rim with the abdomen area of the torso. A problem with such an early coupling is that the driver's head may be prevented from moving forwardly and that neck injury may be caused if the neck is bent rearwardly when the driver strikes the airbag.

US2004/0174003 A1 relates to an airbag cushion, according to the preamble of claim 1, that is lighter-weight, smaller, and more compact than the previously known airbag systems, yet still capable of providing a vehicle occupant with ample impact protection during a crash. Generally, the airbag comprises a one-piece woven cushion with two or more inflatable chambers. These chambers have a generally flat two-dimensional shape in its uninflated and unfolded configuration. However, once gas is added, the airbag cushion rapidly inflates and converts into a three-dimensional shape capable of providing impact protection to the occupant. Preferably, the three-dimensional configuration of the inflated airbag is generally triangular, V-shaped, or polygonal in shape. One of the inflatable chambers functions as an inflatable impact chamber configured such that when an inflation gas in infused into the airbag cushion during a vehicle crash, the inflatable impact chamber inflates and presents a surface to receive the impact of the body of a vehicle occupant. One of the other inflatable chambers is configured to comprise an inflatable support column that is in fluid communication with the inflatable impact chamber. The inflatable support column is constructed such that if inflatable impact chamber begins to compress or deflate under the stress of a crash, the inflatable support column provides a compression-resisting force to the inflatable impact chamber. Additional inflatable support columns may also be added.

It is an object of the invention to provide an improved airbag which will reduce the above noted problems and yet which can be manufactured relatively easily.

According to one aspect of the invention, there is provided a vehicle airbag suitable for mounting in front of a vehicle occupant for deployment into a region in front of the head and chest of said occupant, the airbag comprising superimposed first and second fabric layers sealed together along seams including first and second opposing side seams and first and second end seams, said first and second layers being folded at a fold line extending between the opposing side seams to define, on one side of said fold line, a first airbag cell between said first and second layers and bounded by said first end seam and the parts of said side seams extending from said fold line to said first end seam and to define, on the other side of said fold line, a second airbag cell between said first and second layers and bounded by said second end seam and the parts of said side seams extending from said fold line to said second end seam, the part of said first side seam extending along one side of said first cell being connected by a connecting element with the part of said first side seam extending along the adjacent side of said second cell, and the part of said second side seam extending along the other side of said first cell being connected by a respective connecting element web with the part of said second seam extending along the adjacent side of said second cell, whereby, when the airbag is inflated, it assumes a generally V-shaped configuration, with said fold line providing the vertex of the V and the inflated said first and second cells forming respective arms of the V, the first and second cells being partially separated by at least one further seam, the seam arranged to restrict the flow of gas from the first cell to the second cell.

In one embodiment, said first cell is configured for direct connection with an inflator and is longer, in terms of distance from said fold line to said first end seam, than is said second cell, in terms of distance from said fold line to said second end seam.

In another embodiment, said first cell is configured for direct connection with an inflator and is shorter, in terms of distance from said fold line to said first end seam, than said second cell, in terms of distance from said fold line to said second end seam, and a hinge line extending across said second cell at a location intermediate said fold line and said first end seam is defined by further seams connecting said two layers together and extending only partially between said side seams so as to leave a restricted passage for gas to travel from the part of said second cell nearer the fold line on one side of the hinge line to the part of said second cell further from the fold line on the other side of said hinge line.

Preferably each said connecting element comprises a respective fabric gusset.

Preferably, the airbag is of one-piece woven construction, said first and second fabric layers being formed by respective sets of warps and wefts and said seams being provided by regions where the warps and the wefts of said two layers are interwoven into a single layer.

The airbag preferably includes tear seams to protect the panel attachment points, and/or to protect the seam extending along the fold line.

The invention also extends to a motor vehicle having a seat for an occupant, the seat having a back and a seat squab, and an airbag according to the invention mounted in front of the position of the head and chest of such occupant, and thus in a position opposite said seat back and above the level of the seat squab, the airbag being so mounted that, when the bag is inflated, said vertex, at said fold line, is lowermost and faces towards the seat squab, and said second cell is closer to the seat back than the first cell.

According to a further aspect of the invention, there is provided a method of forming an airbag comprising providing a flat fabric construction comprising at least in an area thereof, first and second superimposed fabric layers bounded by first and second side seams and first and second end seams, providing, extending from said area, from each of said side seams, on each side of a fold line extending transversely between said side seams, respective gusset panels, folding said fabric construction about said fold line to divide the construction into two cells and to bring the gusset panels on opposite sides of said fold line extending from said first side seam together and stitching them together along their free edges remote from said first side seam to form a first gusset connecting said two cells on one side, and to bring the gusset panels extending from said second side seam on opposite sides of said fold line together and stitching them together along their free edges remote from said second side seam, to form a second gusset connecting said two cells on the other side of the airbag, further including providing at least one further seam between the two cells to restrict the flow of gas from one cell to the other cell.

Preferably said flat fabric construction is provided as a one-piece woven fabric.

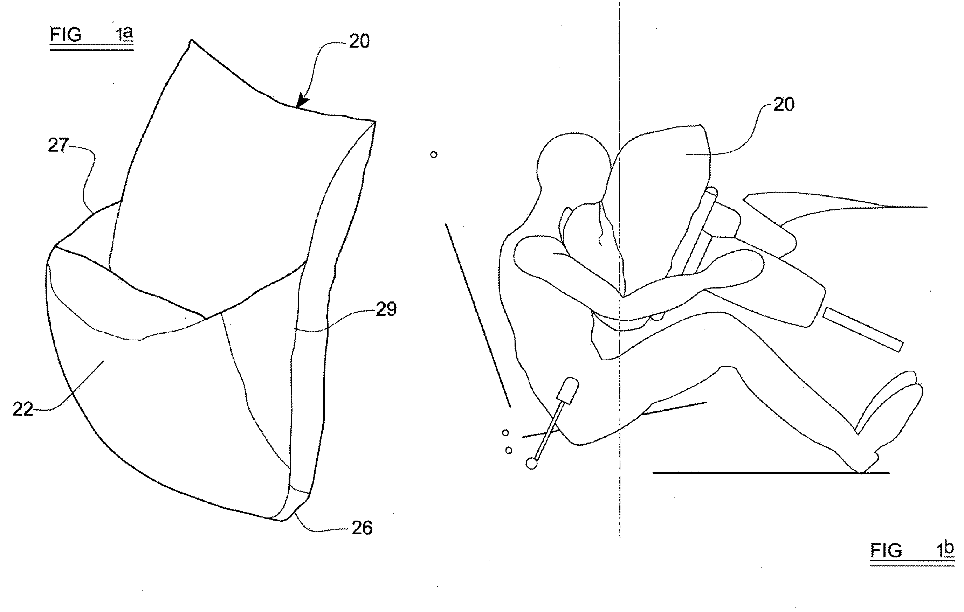

Embodiments of the invention are described below by way of example with reference to the accompanying drawings in which:-
Figure 1 a is a perspective view of an airbag embodying the invention in a deployed, inflated condition,
Figure 1 b is a side view illustrating the inflated airbag extending from a vehicle steering wheel and in operation to protect the vehicle driver in a collision situation,
Figures 2a to 2d are views similar to Figure 1 B but illustrating successive stages in deployment of the airbag in a crash situation,
Figure 3 is a plan view showing a fabric structure at an intermediate point in manufacture of the airbag of Figures 1 to 2D,
Figure 4a is a plan view similar to Figure 3 showing a fabric structure in an intermediate phase of manufacture of a variant embodiment of the invention,
Figure 4b illustrates schematically the completed airbag of Figure 4a,
Figure 5a is a plan view from above, and
Figure 5b is a perspective view from above and one side, illustrating the airbag of Figures 4a and 4b deployed in a crash situation to protect a vehicle driver,
Figures 6a to 6d are view similar to Figures 2a to 2d illustrating successive stages in a crash situation in which the bag of Figures 4a to 5b is deployed,
Figure 7a is a plan view similar to Figure 3 showing a flat fabric structure in the course of manufacture of the air bag of Figures 4 to 6,
Figure 7b is a perspective view of the structure of Figure 7a,
Figure 7c is a perspective view illustrating a further stage in manufacture, and
Figure 7d is a side view corresponding to Figure 7c.

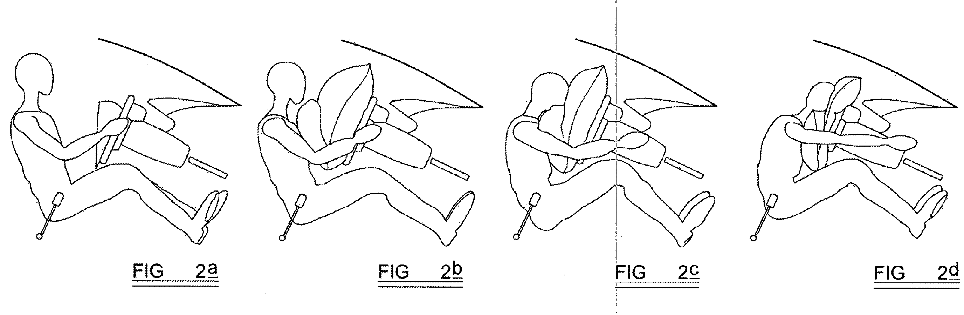

Referring to Figure 1 a, in a first embodiment, a driver airbag comprises two rectangular cells or cushions, 20,22, which are connected together along their lower edge at a fold line 26 and, as shown in side view in Figure 1b, when inflated, diverge away from one another upwardly from the fold line 26 in a generally V-shaped configuration. That is to say, in the inflated condition of the airbag, at locations mid-way between the opposite ends of the fold line 26 the adjacent walls of the two cushions 20,22 are actually in contact with one another over a lower part of their extent from the region of the fold line 26, whereas at the two sides of the airbag, i.e. at the regions extending upwardly from opposite ends of the fold line 26, respective side seams (see below) of the two cushions diverge upwardly in V-shaped configuration from each end of the fold line 26. To retain this V-shaped configuration of the inflated airbag, the adjacent side seams of the two cells or cushions 20,22 on the right side of the airbag are connected by a triangular gusset 27 and the adjacent side seams of the two cells or cushions 20,22 on the left side of the airbag are connected by a triangular gusset 29, as shown in Figure 1b. In a typical application, as indicated in Figure 1 b and Figures 2a to 2d, the airbag is normally mounted in the hub of the steering wheel of a motor vehicle, in front of the vehicle driver, with the cushion or cell 20 furthest from the driver in the inflated condition being connected, in manner known per se, with a pyrotechnic inflator so that when the airbag is inflated by such inflator, the cell 20 nearer the steering wheel is inflated directly from the inflator and the cushion or cell 22 nearer the driver is inflated by gas passing from the cell 20 into the cell 22. In normal use of the vehicle concerned, of course, the air bag in a folded or collapsed condition is stowed, with the inflator in a compartment in the steering wheel hub which is closed by a detachable cover.

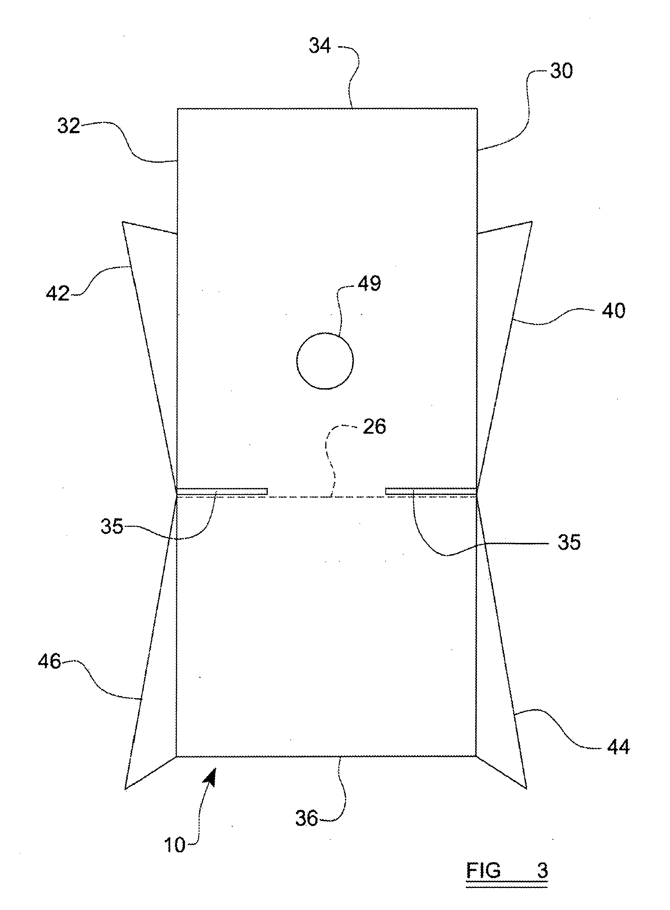

The configuration of the airbag may be better appreciated from the following brief description of the method by which the airbag is manufactured. Thus, referring Figure 3, the airbag may be regarded as a structure 10 formed from two superimposed flat panels of fabric of the same size and shape which are sealed together along first and second side seams 30,32 respectively and along upper and lower (in Figure 3) end seams 34,36 respectively. As shown in Figure 3 the side seams 30, 32 are straight and parallel with one another and the end seams 34 and 36 are likewise straight and parallel with one another and perpendicular to the side seams 30,32, whereby the seams 30,32,34,36 bound a rectangular area of the structure 10. Fold line 26 is shown running across the structure transversely to the side seams 30,32 and parallel to the end seams 34 and 36. Triangular gusset panels 40 and 44 of the same size and shape as one another extend from side seam 30 and triangular gusset panels 42 and 46 of the same size and shape extend from side seam 32. The triangular panels 40 and 44 each have a long side formed by a respective part of the seam 30, a vertex at one end of line 26 and a further long side extending from that vertex, at an angle to the seam 30, to the remaining, short, side of the triangle. Likewise, the triangular panels 42 and 46 each have a long side formed by a respective part of the seam 32, a vertex at the other end of line 26 and a further long side extending from that vertex, at an angle to the seam 32, to the remaining, short, side of the triangle. The seam 34 is further from the fold line 26 than the seam 36 and the gusset panels 44 and 46 extend as far as the seam 36, whilst the gusset panels 40 and 42, which are of the same length as the panels 44 and 46, extend only part of the way from the fold line 26 to the seam 34. The part of the structure 10 between the fold line 26 and the seam 34 forms the longer cell or cushion 20 whilst the part of the structure between the fold line 26 and the seam 36 forms the shorter cell or cushion 20.

In making the bag, the structure 10 is folded about the line 26, and the outer edge of the gusset panel 40 is stitched to the outer edge of the gusset panel 44 to form the gusset 29 and the outer edge of the gusset panel 42 is stitched to the outer edge of the gusset panel 46 to form the gusset 27. On one side of the part of the structure 10 providing the longer cushion 20 is secured a reinforcing interface panel (not shown) with an opening or port indicated at 49 in Figure 3 to receive an outlet of a pyrotechnic gas generator, (not shown) mounted in the steering wheel hub in manner known per se.

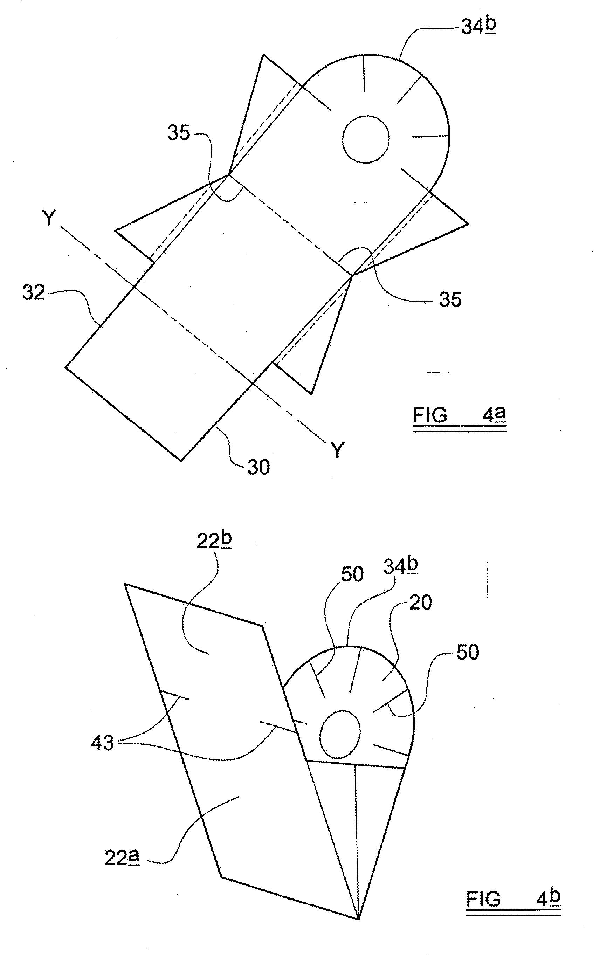

It will be appreciated, of course, that both cushions 20, 22 need not be rectangular as illustrated in Figures 1 to 3. In a variant illustrated in Figures 4a to 7d, for example, one cell or cushion has its free edge remote from the fold line 26 rounded whilst the free edge of the other cell or cushion remote from fold line 26 is straight. Similarly, the side edges of each cushion or cell panel might themselves diverge slightly or converge slightly according to requirements.

As indicated above, in a typical application, the airbag will be mounted in the hub of the steering wheel in front of the vehicle driver, with the cushion cell 20 furthest from the driver in the inflated condition being connected, in manner known per se, with a pyrotechnic inflator, for direct inflation from the inflator and with the cushion or cell nearer the driver being inflated by gas passing from the cushion 20 into the cushion 22 through the region of the structure across which the fold line 26 extends. Due partly to the configuration of the airbag, the gas pressure within the cell or cushion 22 will generally be lower than the gas pressure within the cell 20 during the relevant part of a crash situation in which the airbag is effective. This pressure difference is desirable to provide a softer cell for the driver's head and body to strike. Additionally, the softer nature of the cell 22 allows a measure of forward pivoting movement of the driver's head in the crash situation to avoid the kind of neck injury referred to above. The pressure difference between the two cushions and the development of the relative pressures between the two cushions during the impact period can be tuned for a preferred result, by restricting to a desired degree the flow of gas from the cell 20, which is directly connected to the inflator, to the cell 22. This may be done, for example, by providing seams 35 as shown in Figure 3 connecting the superimposed layers of the bag along parts of the fold 26, or along a line adjacent the fold, said seams 35 for example extending from the side seams 30, 32 towards one another so that gas can flow from cell 20 to cell 22 only through the region between the inner ends of the seams 35. It will be understood of course that other seam configurations providing such restriction between the cells 20, 22 may be used.

In the airbag of Figures 1 to 3, the cushion 22 nearer the driver is shorter than the cushion 20 nearer the steering wheel. This arrangement allows the driver's head to strike the cushion 20after pivoting forward about the neck over the upper end of the cushion 22. Figures 2a to 2d show successive stages, during a crash, of deployment of the airbag and engagement of the vehicle driver with the airbag. Figures 2c and 2d illustrate the driver's head swinging over the cushion 20 and striking the upper end of the cushion 20.

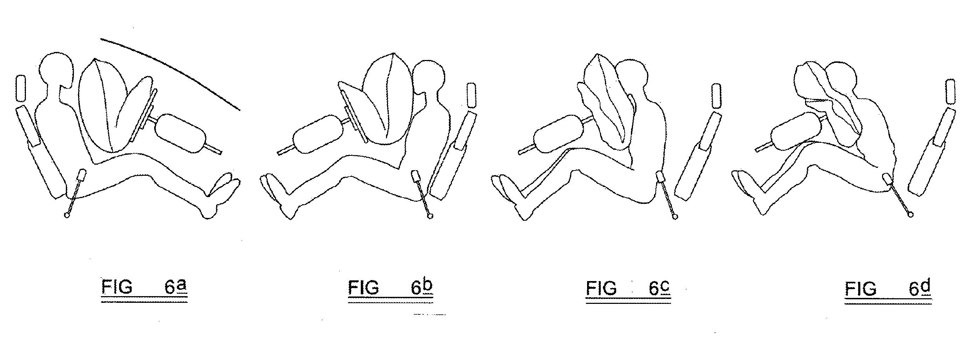

In an alternative driver airbag arrangement illustrated in Figures 4a to 6d, in which like parts, as compared with Figures 1 to 3, have like references, the cushion 22 nearer the driver, as best shown in Figures 6a to 6d, is of greater height than the cushion 20 nearer the steering wheel, but the cushion 22 is effectively divided into a lower front cushion 22a and an upper front cushion 22b by a hinge region defined by seams 43,as shown in Figure 4b, which extend inwardly from the sides of the front cushion 22 along a further transverse line Y - Y (Figures 4a and 4b), perpendicular to the side seams 30,32, these further transverse seams 43 stopping short of a central region which forms a restricted throat connecting the lower front cushion 22a with the upper front cushion 22b as shown in Figures 4a and 4b. This arrangement allows the upper front cushion 22b to inflate slightly more slowly than the lower front cushion 22a so that, in a crash situation, the driver's head can again tilt forward somewhat, tilting over the more fully inflated lower front cushion 22a to engage the softer and less fully inflated upper front cushion 22b. In the airbag of Figures 4a and 4b, the cushion 20 has an arcuate upper edge 34b in place of the straight upper edge 34 of the airbag of Figures 1 to 3.

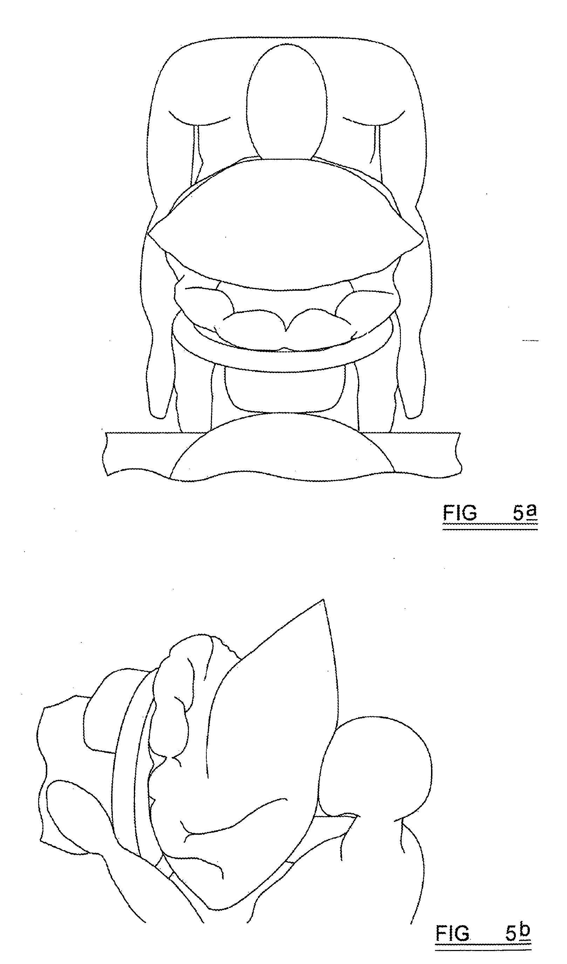

Figures 5a and 5b illustrate in plan the deployment of the airbag of Figures 4a to 6d in a crash situation and Figures 6a to 6d, which are views similar to Figures 2a to 2d, illustrate successive stages during a crash with this airbag.

The airbag of Figures 4a to 6d is particularly advantageous in a situation where it is activated by a pre-crash sensor, (i.e. a sensor triggered by factors likely to precede an actual crash, such as abnormal decelerational forces).

The airbag of Figures 4a to 6d can avoid or minimise neck injury in such a pre-crash situation in which it is deployed (or, indeed, in a crash situation), where the driver engages the fully inflated bag. Because the cushion 22 can fold at the hinge region defined by the seams 43, the restraining force applied on the driver's head is reduced (since cushion 22b can tilt), while the restraining force on the driver's thorax (provided by cushion 22a) remains high. Thus neck extension moment is reduced, reducing the risk of neck injury, which is an important consideration in design of an airbag to be deployed in a pre-crash situation.

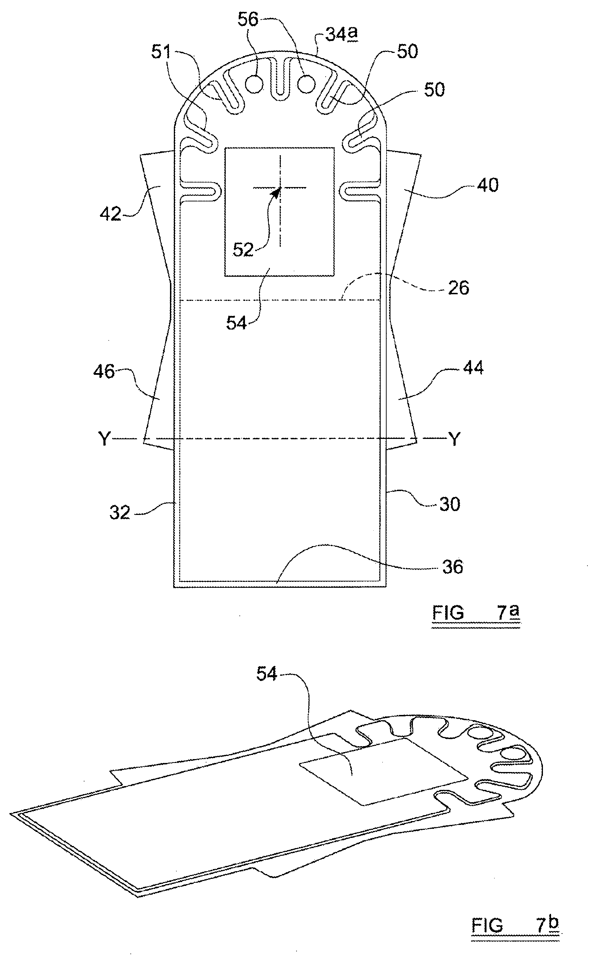

Manufacture of the airbag of Figures 4a to 6d is described below with reference to Figures 7a to 7d, in which parts corresponding to parts in Figures 1 to 3 have the same references. In this embodiment, the airbag is of one piece woven construction, known per se, in which a flat fabric structure shown in plan in Figure 7a comprises first and second superimposed fabric layers each woven with its own warps and wefts, but in which, at the edges of the structure, the warps and wefts of the first and second layers are interwoven to provide the four seams 30, 32, 34a, 36 connecting the two layers, including parallel side seams 30, 32, a straight seam 36 (at the bottom in Figure 7a) and an arcuate seam 34a (at the top in Figure 7a). In Figure 7a, short seams 50 formed by interweaving warps and wefts of the first and second layers also extend inwardly for a short distance along respective radii from a point 52 corresponding to the centre of curvature of the arcuate end seam 34a. These seams 50 serve to limit the depth of the panel 20 in its upper region when the airbag is inflated, as shown in Figures 5a and 5b. At the point 52 is located, or will be located, an inlet, reinforced by an interface panel indicated at 54, connectable with a pyrotechnic gas generator or inflator, (not shown). Tear seams 51 connecting the first and second fabric layers may extend around these interior seams 50, and vent holes 56 may be provided in one of the two layers, between adjoining seams 50. Further tear seams may be provided to protect the panel attachment points and/or to protect the seam extending along the fold line 26.

In the inflated condition of the bag, as best shown in Figure 5a and 5b, the regions of the bag defined between the seams 50 lie over the upper part of the rim of the vehicle steering wheel and provide early and additional protection for the vehicle driver against injury which might otherwise arise from impact of the driver with that portion of the steering wheel rim. As in the airbag of Figures 1 to 3 the structure shown in Figure 7a has, on the outside of each side seam 30, 32, a respective pair of gusset panels 40, 44; 42, 46 each pair comprising an upper (in Figure 7a) generally triangular panel 40 or 42 and an identical but inverted lower (in Figure 4c) generally triangular panel 44 or 46, each gusset panel 40, 42, 44, 46 again having one of its two longer sides coincident with the respective adjacent side seam 30 or 32 and the other of its two longer sides diverging from the respective side seam, from a location on the side seam, at the respective end of fold line 26 to the shortest side of the triangular panel. The fold line 26, shown in broken lines in Figure 7a, is again perpendicular to the side seams 30, 32 and parallel with the bottom seam 36. In manufacture of the bag, the structure shown is cut from a continuous one piece woven fabric web along the outer peripheries of the seams 30,32,34a,36 (except in the regions where the triangular panels 40, 42, 44, 46 are located, where the structure is cut around the outer edges of the triangular panels). The triangular gusset panels 40, 42, 44, 46 may, like the side seams 30, 32 and end seams 36, 34a, be provided by portions of the fabric in which the warps and wefts form a unitary fabric layer. In the embodiment of Figures 7a to 7d, the interface panel 54 is a rectangular fabric panel, with a central aperture or slot, which is secured to one of the fabric layers by adhesive.

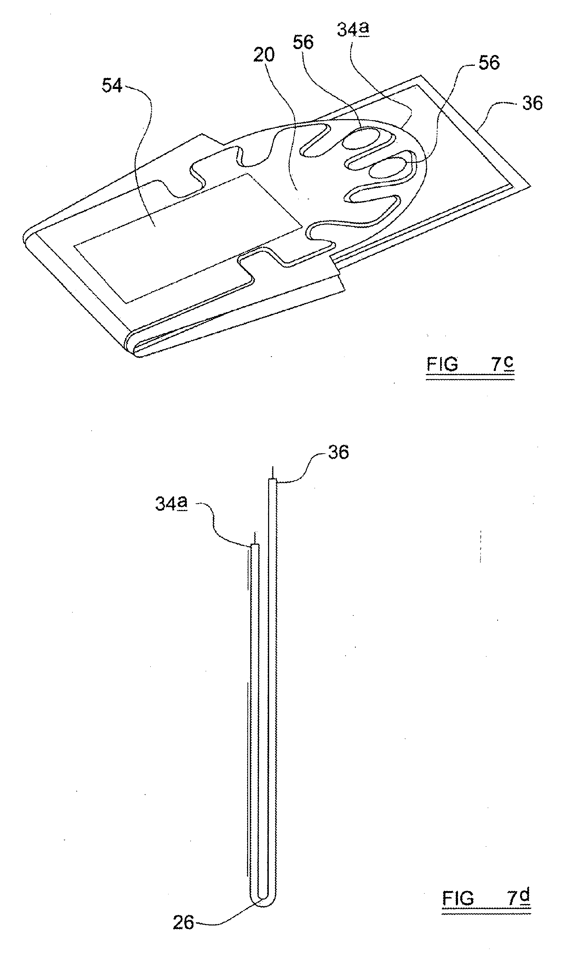

In the same way as described with reference to Figure 3, the structure of Figure 7a is folded about the line 26 into the form shown in perspective in Figure 7c and in side view in Figure 7d, so that the triangular panels 40 and 44 are superimposed and the triangular panels 42 and 46 are superimposed, and so that the free edges of the triangular panels 40, 44 on one side are brought in to register and the free edges of panels 42, 46 on the other side are likewise brought into register. The superimposed triangular panels, as in manufacture of the bag of Figures 1 to 3, are stitched together along their registering free longer edges so that panels 40 and 44 together form a triangular gusset on one side of the airbag and panels 42 and 46 together form a similar triangular gusset on the other side of the airbag. As shown in Figures 7c and 7d, (and also in Figures 6a to 6d), in this condition, the arcuate end seam 34a is significantly close to the fold line 26 than the straight end seam 36, so that the part of the structure extending from the fold line 26 to the rounded end seam 34a forms the shorter cushion or cell 20 of the bag and the part of the structure extending from the fold 26 to the straight seam 36 forms the longer cushion or cell 22 of the bag.

The stitched together triangular gusset panels 40, 42, 44, 46 on either side together form respective triangular gussets which again allow the cushions or cells 20 and 22 to diverge somewhat in a V-shaped configuration when the bag is inflated, as described above in relation to Figure 3.

The seams 43 are not shown in Figures 7a to 7d, but the line Y - Y where seams 43 may be located is indicated in Figure 7a. In some variants, the seams 43 may, in fact, be omitted.

## Claims

1. A vehicle airbag (10) suitable for mounting in front of a vehicle occupant for deployment into a region in front of the head and chest of said occupant, the airbag (10) comprising superimposed first and second fabric layers sealed together along seams including first and second opposing side seams (30, 32) and first and second end seams (34, 36), said first and second layers being folded at a fold line (26) extending between the opposing side seams (30, 32) to define, on one side of said fold line (26), a first airbag cell (20) between said first and second layers and bounded by said first end seam (34) and the parts of said side seams (30, 32) extending from said fold line (26) to said first end seam (34) and to define, on the other side of said fold line (26), a second airbag cell (22) between said first and second layers and bounded by said second end seam (36) and the parts of said side seams (30, 32) extending from said fold line (26) to said second end seam (36), the part of said first side seam (30) extending along one side of said first cell (20) being connected by a connecting element (27) with the part of said first side seam (30) extending along the adjacent side of said second cell (22), and the part of said second side seam (32) extending along the other side of said first cell (20) being connected by a respective connecting element (29) with the part of said second side seam (32) extending along the adjacent side of said second cell (22), whereby, when the airbag (10) is inflated, it assumes a generally V-shaped configuration, with said fold line (26) providing the vertex of the V and the inflated said first and second cells (20, 22) forming respective arms of the V, ***characterised in that*** the first and second cells (20, 22) are partially separated by at least one further seam (35), the seam arranged to restrict the flow of gas from the first cell (20) to the second cell (22).

2. An airbag (10) according to claim 1 wherein said first cell (20) is configured for direct connection with an inflator and is longer, in terms of distance from said fold line (26) to said first end seam (34), than is said second cell (22), in terms of distance from said fold line (26) to said second end seam (36).

3. An airbag (10) according to claim 1 wherein at least one said further seam (35) extends along the fold line (26).

4. An airbag (10) according to claim 1 or 3 wherein said first cell (20) is configured for direct connection with an inflator and is shorter, in terms of distance from said fold line (26) to said first end seam (34), than said second cell (22), in terms of distance from said fold line (26) to said second end seam (36), and a hinge line (43) extending across said second cell (22) at a location intermediate said fold line (26) and said first end seam (34) is defined by further seams (43) connecting said two layers together and extending only partially between said side seams (30, 32) so as to leave a restricted passage for gas to travel from the part of said second cell (22) nearer the fold line on one side of the hinge line (43) to the part of said second cell (22) further from the fold line (26) on the other side of said hinge line (43).

5. An airbag (10) according to any preceding claim wherein each said connecting element (27, 29) comprises a respective fabric gusset (40, 42, 44, 46).

6. An airbag (10) according to any preceding claim which is of one-piece woven construction, said first and second fabric layers being formed by respective sets of warps and wefts and said seams (30, 32, 34, 35, 36, 43) being provided by regions where the warps and the wefts of said two layers are interwoven into a single layer.

7. An airbag (10) according to any preceding claim including tear seams (51) to protect the panel attachment points.

8. An airbag according to claim 3 including a tear seam or seams (51) to protect the seam (35) extending along the fold line (26).

9. A motor vehicle having a seat for an occupant, the seat having a back and a seat squab, and an airbag (10) according to any of claims 1 or 2 mounted in front of the position of the head and chest of such occupant, and thus in a position opposite said seat back and above the level of the seat squab, the airbag (10) being so mounted that, when the bag is inflated, said vertex, at said fold line (26), is lowermost and faces towards the seat squab, and said second cell (22) is closer to the seat back than the first cell (20).

10. A method of forming an airbag (10) comprising providing a flat fabric construction comprising at least in an area thereof, first and second superimposed fabric layers bounded by first and second side seams (30, 32) and first and second end seams (34, 36), providing, extending from said area, from each of said side seams (30, 32), on each side of a fold line (26) extending transversely between said side seams (30, 32), respective gusset panels (40, 42, 44, 46), folding said fabric construction about said fold line (26) to divide the construction into two cells (20, 22) and to bring the gusset panels (40, 44) on opposite sides of said fold line (26) extending from said first side seam (30) together and stitching them together along their free edges remote from said first side seam (30) to form a first gusset (40, 44) connecting said two cells (20, 22) on one side, and to bring the gusset panels (42, 46) extending from said second side seam (32) on opposite sides of said fold line (26) together and stitching them together along their free edges remote from said second side seam (32), to form a second gusset (42, 46) connecting said two cells (20, 22) on the other side of the airbag (10), ***characterised in that*** at least one further seam (35) is provided between the two cells (20, 22) to restrict the flow of gas from one cell (20) to the other cell (22).

11. The method according to claim 10, further including providing said flat fabric construction as a one-piece woven fabric.

## Patentansprüche

1. Fahrzeugairbag (10), der für den Einbau vor einem Fahrzeuginsassen zur Entfaltung in einen Bereich vor dem Kopf und der Brust des Insassen geeignet ist, wobei der Airbag (10) übereinandergelegt eine erste und zweite Stoffschicht umfasst, die entlang von Nähten verbunden sind, die eine erste und zweite gegenüberliegende Seitennaht (30, 32) und eine erste und zweite Endnaht (34, 36) aufweisen, wobei die erste und zweite Schicht an einer Faltlinie (26) gefaltet sind, die zwischen den gegenüberliegenden Seitennähten (30, 32) verläuft, um auf einer Seite der Faltlinie (26) eine erste Airbagzelle (20) zwischen der ersten und zweiten Schicht zu definieren, die von der ersten Endnaht (34) und den Teilen der Seitennähte (30, 32) begrenzt ist, die von der Faltlinie (26) zu der ersten Endnaht (34) verlaufen, und um, auf der anderen Seite der Faltlinie (26), eine zweite Airbagzelle (22) zwischen der ersten und zweiten Schicht zu definieren, die von der zweiten Endnaht (36) und den Teilen der Seitennähte (30, 32) begrenzt ist, die von der Faltlinie (26) zu der zweiten Endnaht (36) verlaufen, wobei der Teil der ersten Seitennaht (30), der entlang einer Seite der ersten Zelle (20) verläuft, über ein Verbindungselement (27) mit dem Teil der ersten Seitennaht (30) verbunden ist, der entlang der angrenzenden Seite der zweiten Zelle (22) verläuft, und der Teil der zweiten Seitennaht (32), der entlang der anderen Seite der ersten Zelle (20) verläuft, über ein entsprechendes Verbindungselement (29) mit dem Teil der zweiten Seitennaht (32) verbunden ist, der entlang der angrenzenden Seite der zweiten Zelle (22) verläuft, wodurch, wenn der Airbag (10) aufgeblasen ist, er eine im Allgemeinen V-förmige Gestalt annimmt, wobei die Faltlinie (26) die Spitze des V darstellt und die aufgeblasene erste und zweite Zelle (20, 22) jeweilige Schenkel des V bilden, **dadurch gekennzeichnet, dass** die erste und zweite Zelle (20, 22) durch mindestens eine weitere Naht (35) teilweise getrennt sind, wobei die Naht so angeordnet ist, dass sie den Gasstrom aus der ersten Zelle (20) zur zweiten Zelle (22) beschränkt.

2. Airbag (10) nach Anspruch 1, wobei die erste Zelle (20) für die direkte Verbindung mit einem Gasgenerator eingerichtet ist und hinsichtlich des Abstands von der Faltlinie (26) zu der ersten Endnaht (34) länger ist als die zweite Zelle (22) hinsichtlich des Abstands von der Faltlinie (26) zu der zweiten Endnaht (36) ist.

3. Airbag (10) nach Anspruch 1, wobei mindestens eine solche weitere Naht (35) entlang der Faltlinie (26) verläuft.

4. Airbag (10) nach Anspruch 1 oder 3, wobei die erste Zelle (20) für die direkte Verbindung mit einem Gasgenerator eingerichtet ist und hinsichtlich des Abstands von der Faltlinie (26) zu der ersten Endnaht (34) kürzer ist als die zweite Zelle (22) hinsichtlich des Abstands von der Faltlinie (26) zu der zweiten Endnaht (36), und wobei eine Klapplinie (43), die über die zweite Zelle (22) an einer Stelle zwischen der Faltlinie (26) und der ersten Endnaht (34) verläuft, durch weitere Nähte (43) definiert ist, die die beiden Schichten miteinander verbinden und nur teilweise zwischen den Seitennähten (30, 32) verlaufen, um einen eingeengten Kanal übrig zu lassen, damit Gas von dem Teil der zweiten Zelle (22) näher an der Faltlinie auf einer Seite der Klapplinie (43) zu dem Teil der zweiten Zelle (22) weiter weg von der Faltlinie (26) auf der anderen Seite der Klapplinie (43) strömt.

5. Airbag (10) nach einem vorhergehenden Anspruch, wobei jedes Verbindungselement (27, 29) einen entsprechenden Stoffkeil (40, 42, 44, 46) umfasst.

6. Airbag (10) nach einem vorhergehenden Anspruch, der eine einteilige gewebte Konstruktion aufweist, wobei die erste und zweite Stoffschicht aus entsprechenden Gruppen von Kett- und Schussfäden gebildet sind, und die Nähte (30, 32, 34, 35, 36, 43) von Bereichen bereitgestellt sind, in denen die Kettfäden und die Schussfäden der zwei Schichten zu einer einzigen Schicht miteinander verwebt sind.

7. Airbag (10) nach einem vorhergehenden Anspruch, der Reißnähte (51) aufweist, um die Bahnbefestigungspunkte zu schützen.

8. Airbag nach Anspruch 3, der eine Reißnaht oder Reißnähte (51) aufweist, um die Naht (35) zu schützen, die entlang der Faltlinie (26) verläuft.

9. Kraftfahrzeug, das einen Sitz für einen Insassen aufweist, wobei der Sitz eine Lehne und ein Sitzpolster aufweist, und einen Airbag (10) nach einem der Ansprüche 1 oder 2, der vor der Position von Kopf und Brust dieses Insassen eingebaut ist und somit in einer Position gegenüber der Sitzlehne und über der Höhe des Sitzpolsters, wobei der Airbag (10) so montiert ist, dass, wenn der Airbag aufgeblasen ist, die Spitze, an der Faltlinie (26), am tiefsten liegt und in Richtung des Sitzpolsters zeigt, und sich die zweite Zelle (22) näher an der Sitzlehne befindet als die erste Zelle (20).

10. Verfahren zur Herstellung eines Airbags (10), umfassend das Bereitstellen einer flachen Stoffkonstruktion, die zumindest in einem Bereich davon übereinandergelegt eine erste und zweite Stoffschicht umfasst, die durch eine erste und zweite Seitennaht (30, 32) und eine erste und zweite Endnaht (34, 36) begrenzt sind, das Bereitstellen von, ausgehend von dem Bereich, von jeder der Seitennähte (30, 32) aus, auf jeder Seite einer Faltlinie (26), die quer zwischen den Seitennähten (30, 32) verläuft, entsprechenden Keilstücken (40, 42, 44, 46), das Legen der Stoffkonstruktion um die Faltlinie (26), um die Konstruktion in zwei Zellen (20, 22) zu unterteilen und um die Keilstücke (40, 44) auf gegenüberliegenden Seiten der Faltlinie (26), die von der ersten Seitennaht (30) aus verlaufen, zusammenzubringen und sie entlang ihrer freien Ränder entfernt von der ersten Seitennaht (30) zusammenzunähen, um einen ersten Keil (40, 44), der die beiden Zellen (20, 22) verbindet, auf einer Seite zu bilden, und um die Keilstücke (42, 46), die von der zweiten Seitennaht (32) aus verlaufen, auf gegenüberliegenden Seiten der Faltlinie (26) zusammenzubringen und sie entlang ihrer freien Ränder entfernt von der zweiten Seitennaht (32) zusammenzunähen, um einen zweiten Keil (42, 46), der die beiden Zellen (20, 22) verbindet, auf der anderen Seite des Airbags (10) zu bilden, **dadurch gekennzeichnet, dass** mindestens eine weitere Naht (35) zwischen den beiden Zellen (20, 22) angeordnet ist, um den Gasstrom aus einer Zelle (20) zu der anderen Zelle (22) zu beschränken.

11. Verfahren nach Anspruch 10, ferner umfassend das Bereitstellen der flachen Stoffkonstruktion als einteiliges Gewebe.

## Revendications

1. Coussin de sécurité gonflable (10) pour véhicule, approprié pour le montage devant un passager du véhicule pour le déploiement dans une zone devant la tête et la poitrine dudit passager, le coussin de sécurité gonflable (10) comprenant des première et seconde couches de tissu superposées jointes hermétiquement le long de coutures comportant des première et seconde coutures latérales opposées (30, 32) et des première et seconde coutures d'extrémité (34, 36), lesdites première et seconde couches étant pliées sur une ligne de pliage (26) s'étendant entre les coutures latérales opposées (30, 32) pour définir, d'un côté de ladite ligne de pliage (26), une première cellule de coussin de sécurité gonflable (20) entre lesdites première et seconde couches et bordée par ladite première couture d'extrémité (34) et les parties desdites coutures latérales (30, 32) s'étendant de ladite ligne de pliage (26) à ladite première couture d'extrémité (34) et pour définir, de l'autre côté de ladite ligne de pliage (26), une seconde cellule de coussin de sécurité gonflable (22) entre lesdites première et seconde couches et bordée par ladite seconde couture d'extrémité (36) et les parties desdites coutures latérales (30, 32) s'étendant de ladite ligne de pliage (26) à ladite seconde couture d'extrémité (36), la partie de ladite première couture latérale (30) s'étendant le long d'un côté de ladite première cellule (20) étant connectée par un élément de connexion (27) à la partie de ladite première couture latérale (30) s'étendant le long du côté adjacent de ladite seconde cellule (22), et la partie de ladite seconde couture latérale (32) s'étendant le long de l'autre côté de ladite première cellule (20) étant connectée par un élément de connexion respectif (29) à la partie de ladite seconde couture latérale (32) s'étendant le long du côté adjacent de ladite seconde cellule (22), ce par quoi, quand le coussin de sécurité gonflable (10) est gonflé, il prend une configuration généralement en forme de V, avec ladite ligne de pliage (26) fournissant la pointe du V et lesdites première et seconde cellules (20, 22) gonflées formant des bras respectifs du V, **caractérisé en ce que** les première et seconde cellules (20, 22) sont séparées partiellement par au moins une autre couture (35), la couture étant agencée pour limiter l'écoulement de gaz de la première cellule (20) à la seconde cellule (22).

2. Coussin de sécurité gonflable (10) selon la revendication 1, dans lequel ladite première cellule (20) est configurée pour une connexion directe avec un gonfleur et est plus longue, en termes de distance de ladite ligne de pliage (26) à ladite première couture d'extrémité (34), que ladite seconde cellule (22), en termes de distance de ladite ligne de pliage (26) à ladite seconde couture d'extrémité (36).

3. Coussin de sécurité gonflable (10) selon la revendication 1, dans lequel au moins une dite autre couture (35) s'étend le long de la ligne de pliage (26).

4. Coussin de sécurité gonflable (10) selon la revendication 1 ou 3, dans lequel ladite première cellule (20) est configurée pour une connexion directe avec un gonfleur et est plus courte, en termes de distance de ladite ligne de pliage (26) à ladite première couture d'extrémité (34), que ladite seconde cellule (22), en termes de distance de ladite ligne de pliage (26) à ladite seconde couture d'extrémité (36), et une ligne de charnière (43) s'étendant à travers ladite seconde cellule (22) à un emplacement entre ladite ligne de pliage (26) et ladite première couture d'extrémité (34) est définie par d'autres coutures (43) connectant lesdites deux couches l'une à l'autre et s'étendant uniquement partiellement entre lesdites coutures latérales (30, 32) de façon à laisser un passage limité pour que du gaz passe de la partie de ladite seconde cellule (22) plus proche de la ligne de pliage d'un côté de la ligne de charnière (43) à la partie de ladite seconde cellule (22) plus éloignée de la ligne de pliage (26) de l'autre côté de ladite ligne de charnière (43).

5. Coussin de sécurité gonflable (10) selon une quelconque revendication précédente, dans lequel chaque dit élément de connexion (27, 29) comprend un gousset de tissu respectif (40, 42, 44, 46).

6. Coussin de sécurité gonflable (10) selon une quelconque revendication précédente, qui présente une construction tissée en une pièce, lesdites première et seconde couches de tissu étant formées par des ensembles respectifs de chaînes et de trames et lesdites coutures (30, 32, 34, 35, 36, 43) étant mises à disposition par des zones dans lesquelles les chaînes et les trames desdites deux couches sont entrelacées en une couche unique.

7. Coussin de sécurité gonflable (10) selon une quelconque revendication précédente comportant des coutures de rupture (51) pour protéger les points de raccordement de panneau.

8. Coussin de sécurité gonflable selon la revendication 3, comportant une couture ou des coutures de rupture (51) pour protéger la couture (35) s'étendant le long de la ligne de pliage (26).

9. Véhicule à moteur présentant un siège pour un passager, le siège présentant un dossier et un coussin de siège, et un coussin de sécurité gonflable (10) selon l'une quelconque des revendications 1 ou 2, monté devant la position de la tête et de la poitrine de ce passager, et donc dans une position opposée audit dossier de siège et au-dessus du niveau du coussin de siège, le coussin de sécurité gonflable (10) étant monté de sorte que, quand le coussin est gonflé, ladite pointe, au niveau de ladite ligne de pliage (26), est au plus bas et fait face au coussin de siège, et ladite seconde cellule (22) est plus proche du dossier de siège que la première cellule (20).

10. Procédé de formation d'un coussin de sécurité gonflable (10) comprenant la mise à disposition d'une construction de tissu plane comprenant au moins dans une zone de celle-ci, des première et seconde couches de tissu superposées bordées par des première et seconde coutures latérales (30, 32) et des première et seconde coutures d'extrémité (34, 36), la mise à disposition, s'étendant depuis ladite zone, depuis chacune desdites coutures latérales (30, 32) de chaque côté d'une ligne de pliage (26) s'étendant transversalement entre lesdites coutures latérales (30, 32), de panneaux de gousset respectifs (40, 42, 44, 46), le pliage de ladite construction de tissu autour de ladite ligne de pliage (26) pour diviser la construction en deux cellules (20, 22) et pour réunir les panneaux de gousset (40, 44) à des côtés opposés de ladite ligne de pliage (26) s'étendant depuis ladite première couture latérale (30) et les coudre ensemble le long de leurs bords libres éloignés de ladite première couture latérale (30) pour former un premier gousset (40, 44) connectant lesdites deux cellules (20, 22) d'un côté, et pour réunir les panneaux de gousset (42, 46) s'étendant depuis ladite seconde couture latérale (32) à des côtés opposés de ladite ligne de pliage (26) et les coudre ensemble le long de leurs bords libres éloignés de ladite seconde couture latérale (32), pour former un second gousset (42, 46) connectant lesdites deux cellules (20, 22) de l'autre côté du coussin de sécurité gonflable (10), **caractérisé en ce qu'**au moins une autre couture (35) est prévue entre les deux cellules (20, 22) pour limiter l'écoulement de gaz d'une cellule (20) à l'autre cellule (22).

11. Procédé selon la revendication 10, comportant en outre la mise à disposition de ladite construction de tissu plane en tant que tissu en une pièce.
